# EUROPÄISCHE PATENTSCHRIFT

(11) **EP 3 847 063 B1**
(45) Veröffentlichungstag und Bekanntmachung des Hinweises auf die Patenterteilung: **07.06.2023**
(21) Anmeldenummer: 19756121.0
(22) Anmeldetag: 05.08.2019
(51) Int. Cl.: B60T 15/00

(54) **FÜHRUNGSHÜLSE ZUM FÜHREN EINER MANSCHETTE EINES RELAISVENTILS FÜR EINEN ELEKTROPNEUMATISCHEN MODULATOR**
GUIDE SLEEVE FOR A SEALING MEMBER OF A RELAY VALVE OF AN ELECTROPNEUMATIC MODULATOR
DOUILLE DE GUIDE POUR COUPELLE DE VALVE-RALAIS POUR MODULATEUR ÉLECTROPNEUMATIQUE

(30) Priorität: 06.09.2018 DE 102018121718
(43) Veröffentlichungstag der Anmeldung: 14.07.2021
(73) Patentinhaber: KNORR-BREMSE Systeme für Nutzfahrzeuge GmbH, 80809 München (DE)
(72) Erfinder: RÖTHER, Friedbert, 74389 Cleebronn (DE); KRAHL, Martin, 71640 Ludwigsburg (DE)
(86) Internationale Anmeldenummer: PCT/EP2019/070964
(87) Internationale Veröffentlichungsnummer: WO 2020/048706

(56) Entgegenhaltungen:
- EP-A1- 2 407 355
- EP-A2- 2 266 854
- WO-A1-2015/058828
- DE-A1- 2 918 032
- ES-U- 1 033 579

## Beschreibung

Der vorliegende Ansatz bezieht sich auf eine Führungshülse zum Führen einer Manschette eines Relaisventils für einen elektropneumatischen Modulator für eine Bremsanlage für ein Fahrzeug, eine Führungshülsenvorrichtung mit einer Führungshülse, ein Relaisventil mit einer Führungshülsenvorrichtung und ein Verfahren zum Herstellen eines Relaisventils.

Es gibt Relaisventile, bei denen eine Manschette des Relaisventils auf zwei Hohlzylindern geführt wird, die durch ein Kunststoffteil wie eine Führungshülse gebildet sind. Eine Montage eines Dichtelementes und der Manschette und eine Ausrichtung geschehen durch ein Montagewerkzeug von einer oberen Seite eines Moduls eines zweiteiligen Gehäuses. Eine Befestigung der Führungshülse in dem Gehäuse wird über einen Sicherungsring im Gehäuse realisiert. Die WO 2015/058828 A1 beschreibt ein Relaisventil für eine Druckluftanlage, eine Ventileinrichtung mit dem Relaisventil sowie ein Fahrzeug mit dem Relaisventil und/oder mit der Ventileinrichtung. Die EP 2 266 854 A2 beschreibt ein Relaisventil, einen Geräuschdämpfer, ein Ventileinrichtung und ein Fahrzeug. Die ES 1 033 579 U beschreibt einen Trolley zum Transportieren von Objekten. DE 29 18 032 A1 beschreibt ein Relaisventil für druckmittelbeaufschlagte Bremsanlagen an Kraftfahrzeugen und Anhängerfahrzeugen. Die EP 2 407 355 A1 beschreibt ein Relaisventil und ein Verfahren zum Betreiben eines Relaisventils.

Vor diesem Hintergrund ist es die Aufgabe des vorliegenden Ansatzes eine verbesserte Führungshülse zum Führen einer Manschette eines Relaisventils für einen elektropneumatischen Modulator für eine Bremsanlage für ein Fahrzeug, eine Führungshülsenvorrichtung mit einer verbesserten Führungshülse, ein Relaisventil mit einer verbesserten Führungshülsenvorrichtung und ein Verfahren zum Herstellen eines verbesserten Relaisventils zu schaffen.

Diese Aufgabe wird durch eine Führungshülse zum Führen einer Manschette eines Relaisventils für einen elektropneumatischen Modulator für eine Bremsanlage für ein Fahrzeug, eine Führungshülsenvorrichtung mit einer Führungshülse, ein Relaisventil mit einer Führungshülsenvorrichtung und ein Verfahren zum Herstellen eines Relaisventils gemäß den Hauptansprüchen gelöst.

Die mit dem vorgestellten Ansatz erreichbaren Vorteile bestehen darin, dass eine Führungshülse für ein Relaisventil geschaffen wird, die sowohl dazu ausgeformt ist, um eine durch einen Relaiskolben bewegliche Manschette zu führen als auch, um sicher und einfach in einem Gehäuse des Relaisventils befestigt zu werden. Eine hier vorgestellte Führungshülse ist zudem vorteilhafterweise zur Verwendung mit und zur Montage in einem einteiligen Gehäuse des Relaisventils ausgeformt.

Eine Führungshülse zum Führen einer Manschette eines Relaisventils für einen elektropneumatischen Modulator für eine Bremsanlage für ein Fahrzeug umfasst einen Führungsabschnitt und einen Halteabschnitt. Der Führungsabschnitt ist an oder in einen Gegenführungsabschnitt der Manschette des Relaisventils koppelbar ausgeformt, um ein Führen der Manschette entlang des Führungsabschnitts zu ermöglichen. Der Halteabschnitt ist dazu ausgeformt, um die Führungshülse formschlüssig in einem Gehäuse des Relaisventils zu befestigen.

Die Manschette kann in einem betriebsbereiten Zustand des Relaisventils dazu ausgeformt und angeordnet sein, um eine Öffnung des Relaisventils zu verschließen. Durch ein Bewegen eines Relaiskolbens des Relaisventils gegen die Manschette kann die Manschette entlang des Führungsabschnitts der Führungshülse bewegt werden, um das Relaisventil zu öffnen. Die Manschette kann hierzu im betriebsbereiten Zustand des Relaisventils zwischen dem Relaiskolben und der Führungshülse angeordnet sein. Zwischen der Manschette und der Führungshülse kann eine Manschettenfeder eingespannt sein, die dazu ausgebildet ist, um ein Verschließen des Relaisventils zu bewirken, wenn der Relaiskolben beabstandet zu der Manschette angeordnet ist. Die Führungshülse selbst kann außerdem als ein Verschluss des Relaisventils dienen. Der Halteabschnitt kann beispielsweise dazu ausgeformt sein, um die Führungshülse formschlüssig in einem Hinterschnitt des Gehäuses des Relaisventils zu befestigen. Ein Außendurchmesser des Halteabschnitts kann hierzu größer sein, als ein Außendurchmesser des Führungsabschnitts, beispielsweise mehr als doppelt so groß. Eine hier vorgestellte Führungshülse ermöglicht vorteilhafterweise eine Doppelfunktion einer Führungshülse, wobei einerseits die Manchette entlang der Führungshülse zentriert geführt werden kann und andererseits eine Befestigung der Führungshülse in dem Gehäuse ermöglicht ist.

Erfindungsgemäß formt der Halteabschnitt zumindest einen Rasthaken und zusätzlich oder alternativ ein Bajonett aus.

Ein solcher Rasthaken und zusätzlich oder alternativ ein Bajonett wird in das Gehäuse, beispielsweise in den Hinterschnitt des Gehäuses, einrasten oder einschnappen, um eine sichere Verbindung zu ermöglichen. Hierbei kann der Rasthaken und zusätzlich oder alternativ das Bajonett dazu ausgeformt sein, um ein Herausgleiten der Führungshülse entgegen einer Einführrichtung der Führungshülse in das Gehäuse bei einer Montage der Führungshülse zu verhindern. So kann eine stabile Befestigung in einem rohrförmigen Gehäuse ermöglicht werden. Der Rasthaken ermöglicht hierbei eine beständige oder unlösbare Verbindung, während das Bajonett eine lösbare Verbindung ermöglichen kann.

Gemäß einer Ausführungsform erstrecken sich der Führungsabschnitt und der Halteabschnitt zu zwei gegenüberliegenden Seiten der Führungshülse. Hierbei können der Führungsabschnitt und der Halteabschnitt an zwei gegenüberliegenden Enden der Führungshülse angeformt sein. So können zu einer Seite der Führungshülse die Manschette und der Relaiskolben geführt werden und zu der gegenüberliegenden Seite das Relaisventil durch den Halteabschnitt verschlossen werden.

Hierbei ist es von Vorteil, wenn die Führungshülse gemäß einer Ausführungsform einen zwischen dem Führungsabschnitt und dem Halteabschnitt angeordneten Mittelabschnitt ausformt, der im Wesentlichen kreisringförmig oder hohlkegelstumpfförmig ausgeformt sein kann. Dieser Mittelabschnitt kann dazu dienen, um den Führungsabschnitt mit dem Halteabschnitt zu verbinden. Der Mittelabschnitt kann sich hierbei im Wesentlichen senkrecht zu einer Erstreckungsachse des Führungsabschnitts erstrecken oder sich schräg von dem Führungsabschnitt weg erstrecken. In einem rohrförmigen Gehäuse kann das Gehäuse oder das Relaisventil somit durch den Mittelabschnitt verschlossen werden. Wenn der Mittelabschnitt die Form eines Hohlkegelstumpfes oder eines Trichters ausformt, kann dies einen Raum in dem Kegelstumpf oder Trichter schaffen. Dieser Raum kann zwischen der Führungshülse und einem gegenüberliegend zu der Manschette angeordneten oder anordenbaren Schalldämpfer ausgeformt sein, damit sich Luft vor einem Ausströmen durch den Schalldämpfer in dem Raum entspannen kann.

Beispielsweise kann der Halteabschnitt an einer Unterseite des Mittelabschnitts und zusätzlich oder alternativ der Führungsabschnitt an einer der Unterseite gegenüberliegenden Oberseite des Mittelabschnitts angeformt sein. Der Halteabschnitt kann sich hierbei von einem Randabschnitt der Unterseite des Mittelabschnitts und zusätzlich oder alternativ kann sich der Führungsabschnitt von einem im Wesentlichen mittigen Bereich der Oberseite des Mittelabschnitts weg erstrecken. Somit sind eine Befestigung der Führungshülse an einer Innenwand des Gehäuses und ein zentriertes Führen der Manschette ermöglicht.

Es ist weiterhin von Vorteil, wenn die Führungshülse gemäß einer Ausführungsform zumindest eine Axialrippe aufweist, die sich von einer dem Halteabschnitt zugewandten Unterseite des Mittelabschnitts weg erstreckt und zusätzlich oder alternativ eine Erstreckungsachse aufweist, die parallel zu dem Führungsabschnitt verlaufend angeordnet ist. Diese Axialrippe kann stabförmig ausgeformt sein. Eine solche Axialrippe kann dazu ausgeformt sein, um im betriebsbereiten Zustand des Relaisventils mit einem Schalldämpfer, in den Schalldämpfer zu ragen oder in diesen einzupressen, um eine Stabilität der Führungshülse zu erhöhen und zusätzlich oder alternativ ein Strömen von Luft in dem Raum zu dem Gehäuse zu reduzieren. Die Führungshülse kann auch eine Mehrzahl solcher Axialrippen aufweisen, welche ringförmig angeordnet sein können.

Zusätzlich oder alternativ kann die Führungshülse zumindest eine Radialrippe aufweisen, die sich an einer dem Halteabschnitt zugewandten Unterseite des Mittelabschnitts radial zwischen einer Hülsendurchgangsöffnung der Führungshülse und dem Halteabschnitt erstrecken kann. Eine solche Radialrippe kann vorteilhafterweise entstehende Luftwirbel in dem Raum reduzieren. Die Führungshülse kann auch eine Mehrzahl solcher Radialrippen aufweisen, welche radial um die Hülsendurchgangsöffnung verlaufend angeordnet sein können.

Der Führungsabschnitt kann eine Außenhülse und eine von der Außenhülse umschlossene Innenhülse ausformen, wobei die Innenhülse eine Hülsendurchgangsöffnung der Führungshülse umfassen kann. Somit können die Außenhülse und zusätzlich oder alternativ die Innenhülse beim Koppeln mit der Manschette in den Gegenführungsabschnitt der Manschette gesteckt oder eingeführt werden. Der Gegenführungsabschnitt kann ähnlich ausgeformt sein, wie der Führungsabschnitt.

Gemäß einer vorteilhaften Ausführungsform ist die Führungshülse einstückig und zusätzlich oder alternativ insgesamt trichterförmig ausgeformt. Eine solche einstückige Führungshülse ist einfach durch beispielsweise einen Spritzguss herstellbar und erfordert dabei wenig Material und Kosten in der Herstellung.

Eine Führungshülsenvorrichtung weist eine Führungshülse in einer der voranstehend vorgestellten Varianten und die Manschette auf, wobei ein Innendurchmesser der Manschette gleich oder kleiner ist als ein Innendurchmesser des Führungsabschnitts der Führungshülse. Eine solche Führungshülsenvorrichtung kann aufgrund der aufeinander angepassten Innendurchmesser des Führungsabschnitts und der Manschette bei einer Montage vorteilhafterweise mit einem einzigen Montagewerkzeug und einem einzigen Montageschritt gemeinsam von einer Seite in das Gehäuse montiert werden. Dies ist insbesondere von Vorteil, wenn auch das Gehäuse des Relaisventils einstückig ausgeformt ist und die in einer Aufnahmekammer des Gehäuses anordenbaren Relaisventilkomponenten bei einer Montage des Relaisventils nacheinander von einer Seite in die Aufnahmekammer eingestapelt werden. Der Gegenführungsabschnitt der Manschette und der Führungsabschnitt können dazu ausgeformt sein, um einen Spalt zwischen dem Gegenführungsabschnitt und dem Führungsabschnitt abzudichten. Hierbei kann ein Ende des Gegenführungsabschnitts ein Dichtelement ausformen, das in dem gekoppelten Zustand des Führungsabschnitts an oder in dem Gegenführungsabschnitt an dem Führungsabschnitt anliegen kann und zusätzlich oder alternativ kann in dem gekoppelten Zustand des Führungsabschnitts an oder in dem Gegenführungsabschnitt ein enger Kontakt herrschen.

Ein Relaisventil weist ein Gehäuse, eine in dem Gehäuse anordenbare oder angeordnete Führungshülsenvorrichtung, die in einer der vorangehend vorgestellten Varianten ausgeformt ist, und einen in dem Gehäuse anordenbaren oder angeordneten Relaiskolben zum Bewegen der Manschette entlang des Führungsabschnitts der Führungshülse auf. Das Gehäuse kann einstückig ausgeformt sein. Der Relaiskolben und die Führungshülsenvorrichtung können in eine Aufnahmekammer des Relaiskolbens ausgenommen sein oder aufgenommen werden. Ein solches Relaisventil weist vorteilhafterweise sehr wenige Bauteile auf und ist einfach montierbar.

Ein Verfahren zum Herstellen eines Relaisventils umfasst einen Schritt des Bereitstellens, einen Schritt des Einfügens und einen Schritt des Einführens. Im Schritt des Bereitstellens werden ein Gehäuse, ein Relaiskolben und eine Führungshülsenvorrichtung bereitgestellt, die in einer der vorangehend vorgestellten Varianten ausgeformt ist. Im Schritt des Einfügens wird der Relaiskolben in das Gehäuse eingefügt. Im Schritt des Einführens wird die Führungshülsenvorrichtung in das Gehäuse eingeführt, wobei die Führungshülsenvorrichtung derart in das Gehäuse eingeführt wird, dass der Führungsabschnitt der Führungshülse an den Gegenführungsabschnitt der Manschette gekoppelt ist und der Halteabschnitt der Führungshülse formschlüssig in dem Gehäuse befestigt ist, indem der Halteabschnitt in einen Hinterschnitt des Gehäuses einrastet oder einschnappt.

Ausführungsbeispiele des hier vorgestellten Ansatzes werden in der nachfolgenden Beschreibung mit Bezug zu den Figuren näher erläutert. Es zeigen:
Fig. 1 eine schematische seitliche Querschnittsdarstellung eines elektropneumatischen Modulators mit einem Relaisventil mit einer Führungshülse zum Führen einer Manschette des Relaisventils gemäß einem Ausführungsbeispiel;
Fig. 2 einen Ausschnitt einer seitlichen Querschnittsdarstellung einer Führungshülsenvorrichtung gemäß einem Ausführungsbeispiel;
Fig. 3 eine schematische Querschnittsdarstellung einer Unterseite einer Führungshülse gemäß einem Ausführungsbeispiel;
Fig. 4 einen Ausschnitt einer seitlichen Querschnittsdarstellung einer Führungshülsenvorrichtung gemäß einem Ausführungsbeispiel; und
Fig. 5 eine schematische Querschnittsdarstellung eines Fahrzeugs 500 mit einem elektropneumatischen Modulator 100 mit einer Führungshülsenvorrichtung gemäß einem Ausführungsbeispiel; und
Fig. 6 ein Ablaufdiagramm eines Verfahrens zum Herstellen eines Relaisventils gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

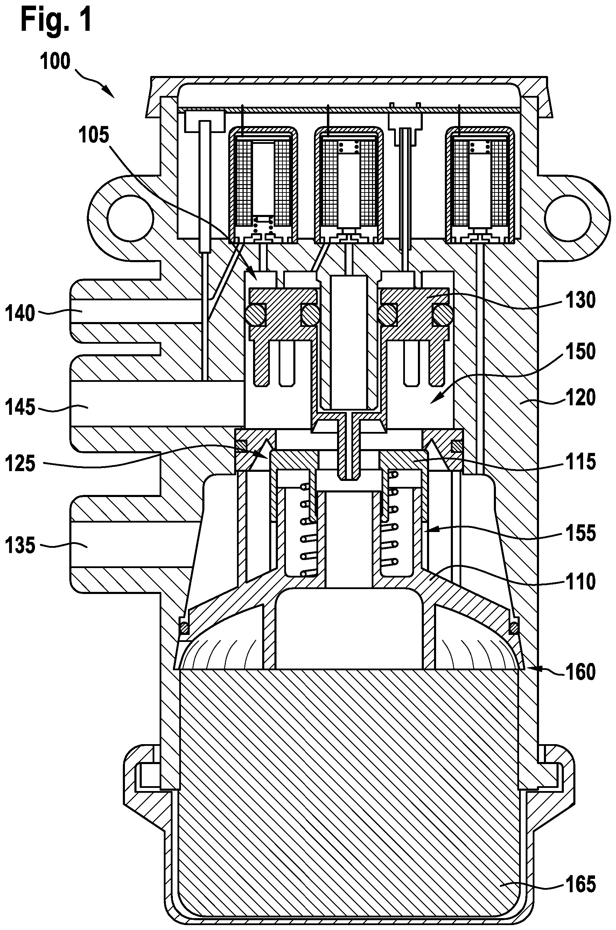

**Fig. 1** zeigt eine schematische seitliche Querschnittsdarstellung eines elektropneumatischen Modulators 100 mit einem Relaisventil 105 mit einer Führungshülse 110 zum Führen einer Manschette 115 des Relaisventils 105 gemäß einem Ausführungsbeispiel.

Der elektropneumatische Modulator 100 ist zur Verwendung für eine elektropneumatische Bremsanlage für ein Fahrzeug ausgeformt und in einem hier dargestellten betriebsbereiten Zustand dazu ausgebildet, um bei einem Bremsvorgang des Fahrzeugs einen bereitgestellten pneumatischen Bremsdruck, also Druckluft, zu regeln.

Lediglich beispielhaft ist das Relaisventil 105 gemäß diesem Ausführungsbeispiel Teil des elektropneumatischen Modulators 100. Das Relaisventil 105 umfasst ein Gehäuse 120, eine in dem Gehäuse 120 anordenbare oder angeordnete Führungshülsenvorrichtung 125 und einen in dem Gehäuse 120 anordenbaren oder angeordneten Relaiskolben 130. Die Führungshülsenvorrichtung 125 umfasst die Führungshülse 110 und die Manschette 115. Gemäß diesem Ausführungsbeispiel ist das Relaisventil 105 in einem betriebsbereiten Zustand angeordnet, in dem der Relaiskolben 130 und die Führungshülsenvorrichtung 125 in dem Gehäuse 120 aufgenommen sind. Die Manschette 115 ist gemäß diesem Ausführungsbeispiel zwischen dem Relaiskolben 130 und der Führungshülse 110 angeordnet.

Es folgt eine Beschreibung einer beispielhaften Funktion des elektropneumatischen Modulators 100:
Gemäß einem Ausführungsbeispiel ist der elektropneumatische Modulator 100 Teil der Bremsanlage des Fahrzeugs. Die Bremsanlage umfasst gemäß einem Ausführungsbeispiel neben dem Modulator 100 einen Vorratsbehälter zum Bereitstellen von Druckluft, eine Steuereinrichtung zum Bereitstellen eines elektrischen Steuersignals, eine Fußbremseinrichtung zum Bereitstellen eines pneumatischen Steuersignals und/oder eine Radbremseinrichtung zum Abbremsen eines Rads des Fahrzeugs. Die Funktionalität des Modulators 100 entspricht gemäß einem Ausführungsbeispiel der Funktionalität bekannter im Zusammenhang mit Bremsanlagen eingesetzten elektropneumatischen Modulatoren. Der elektropneumatische Modulator 100 weist gemäß diesem Ausführungsbeispiel einen elektrischen Steuereingang zum Empfangen des elektrischen Steuersignals von der Steuereinrichtung, einen Vorratsanschluss 135 zum Zuführen der Druckluft von dem Vorratsbehälter, einen pneumatischen Steuereingang 140 zum Zuführen der Druckluft von dem Vorratsbehälter ansprechend auf das pneumatische Steuersignal und einen Bremsausgang 145 zum Ausgeben eines Bremsdrucks an die Radbremseinrichtung auf. Die Radbremseinrichtung kann entsprechend einer im Fahrzeugbereich üblichen Bremse ausgeführt sein, und beispielsweise einen durch den Bremsdruck betätigbaren Bremszylinder umfassen. Das elektrische Steuersignal stellt gemäß einem Ausführungsbeispiel ein elektrisches Signal dar. Beispielsweise kann das elektrische Steuersignal einen angeforderten Sollbremsdruck anzeigen. In diesem Fall ist die Steuereinrichtung beispielsweise als ein Bremssteuergerät ausgeführt und der elektropneumatische Modulator 100 umfasst beispielsweise zumindest ein Magnetventil, das unter Verwendung des elektrischen Steuersignals oder eines ansprechend auf einen Empfang des elektrischen Steuersignals generiertes Signal betätigbar ist. Gemäß diesem Ausführungsbeispiel sind der Relaiskolben 130 und die Führungshülsenvorrichtung 125 übereinander in einer Aufnahmekammer 150 des Gehäuses 120 aufgenommen. Der Bremsausgang 145 und der Vorratsanschluss 135 münden in die Aufnahmekammer 150. Das Relaisventil 105 ist dazu ausgebildet und ausgeformt, um eine fluidische Verbindung zwischen dem Vorratsanschluss 135 und dem Bremsausgang 145 durch eine Bewegung des Relaiskolbens 130 zu öffnen oder zu verschließen. Die Aufnahmekammer 150 umfasst einen Steuerkammerabschnitt, der gesteuert durch das elektrische Steuersignal mit zugeführter Druckluft beaufschlagt werden kann, um eine Schaltbewegung des Relaiskolbens 130 zu bewirken. Die Aufnahmekammer 150 umfasst gemäß einem Ausführungsbeispiel außerdem einen Arbeitskammerabschnitt, der fluidisch mit dem Bremsausgang 145 verbunden ist, und durch die Schaltbewegung des Relaiskolbens 130 mit über den Vorratsanschluss 135 zugeführter Druckluft beaufschlagt werden kann, um den Bremsdruck an dem Bremsausgang 145 bereitzustellen.

Die hier vorgestellte Führungshülse 110 ist gemäß diesem Ausführungsbeispiel in oder an dem Relaisventil 105 aufgenommen. Die Führungshülse 110 ist dazu ausgeformt, um die Manschette 115 des Relaisventils 105 zu führen und/oder in dem Gehäuse 120 zu befestigen. Hierzu umfasst die Führungshülse 110 einen Führungsabschnitt 155 und einen Halteabschnitt 160. Der Führungsabschnitt 155 ist an oder in einen Gegenführungsabschnitt der Manschette 115 des Relaisventils 105 koppelbar ausgeformt, um ein Führen der Manschette 115 entlang des Führungsabschnitts 110 zu ermöglichen. Zwischen der Manschette und dem Führungsabschnitt 110 ist gemäß diesem Ausführungsbeispiel eine Manschettenfeder eingespannt.

Der Halteabschnitt 160 ist dazu ausgeformt, um die Führungshülse 110 formschlüssig in dem Gehäuse 120 des Relaisventils 105 zu befestigen.

Gemäß diesem Ausführungsbeispiel ist das Relaisventil 105 in einem betriebsbereiten Zustand angeordnet, in dem der Führungsabschnitt 155 der Führungshülse 110 an oder in den Gegenführungsabschnitt der Manschette 115 gekoppelt angeordnet ist und der Halteabschnitt 160 der Führungshülse 110 formschlüssig in dem Gehäuse 120 befestigt ist. Gemäß diesem Ausführungsbeispiel ist das Relaisventil 105 in einem geschlossenen Zustand angeordnet, in dem der Vorratsanschluss 135 und der Bremsausgang 145 fluidisch nicht miteinander verbunden sind. Der Relaiskolben 130 ist hierbei beabstandet zu der Manschette 115 angeordnet und bewegt diese somit nicht entlang des Führungsabschnitts 155. Der Relaiskolben 130 des Relaisventils 105 ist dazu ausgeformt, um die Manschette 115 entlang des Führungsabschnitts 155 der Führungshülse 110 zu bewegen, um ein Öffnen des Relaisventils 105 zu bewirken. Gemäß diesem Ausführungsbeispiel ist auf einer dem Halteabschnitt 160 zugewandten Seite der Führungshülse 110 ein Schalldämpfer 165 angeordnet. Gemäß einem Ausführungsbeispiel ist der Schalldämpfer 165 Teil des Relaisventils 105 und/oder zumindest teilweise in dem Gehäuse 120 angeordnet.

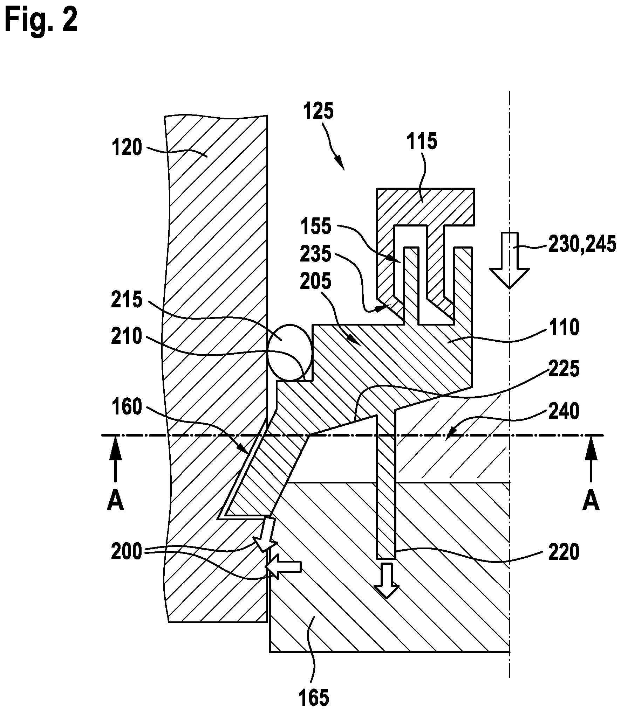

**Fig. 2** zeigt einen Ausschnitt einer seitlichen Querschnittsdarstellung einer Führungshülsenvorrichtung 125 gemäß einem Ausführungsbeispiel. Dabei kann es sich um die in Fig. 1 beschriebene Führungshülsenvorrichtung 125 handeln, bei der die Führungshülse 110 und die Manschette 115 miteinander gekoppelt sind. Auch bei dem Gehäuse 120 kann es sich um das in Fig. 1 beschriebene Gehäuse 120 und bei dem Schalldämpfer 165 kann es sich um den in Fig. 1 beschriebenen Schalldämpfer 165 handeln. Dargestellt ist in Fig. 2 lediglich eine von zwei Hälften des Querschnitts. Eine nicht dargestellte andere Hälfte kann entsprechend der hier gezeigten Hälfte ausgeformt sein.

Erfindungsgemäß formt der Halteabschnitt 160 zumindest einen Rasthaken oder gemäß einem alternativen Ausführungsbeispiel ein Bajonett aus. Dieser Rasthaken ist gemäß einem Ausführungsbeispiel in einem Hinterschnitt des Gehäuses 120 eingerastet. Der Rasthaken, der auch als eine seitliche Schnapprippe bezeichnet werden kann, bewirkt gemäß diesem Ausführungsbeispiel eine radiale Verpressung des Schalldämpfers 165 oder anders ausgedrückt eine radiale Außenpressung 200 auf den Schalldämpfer 165.

Der Führungsabschnitt 155 und der Halteabschnitt 160 erstrecken sich gemäß diesem Ausführungsbeispiel zu zwei gegenüberliegenden Seiten der Führungshülse 110. Eine Erstreckungsachse des Führungsabschnitts 155 verläuft dabei parallel zu einer vorgesehenen Bewegungsachse des Relaiskolbens und/oder einer Erstreckungsachse einer Innenwand des Gehäuses 120. Eine Erstreckungsachse des Halteabschnitts 160 in Form des Rasthakens ist schräg zu der Erstreckungsachse des Führungsabschnitts 155 verlaufend angeordnet. Zwischen dem Führungsabschnitt 155 und dem Halteabschnitt 160 formt die Führungshülse 110 gemäß diesem Ausführungsbeispiel einen Mittelabschnitt 205 aus, der im Wesentlichen kreisringförmig oder hohlkegelstumpfförmig ausgeformt ist. Gemäß diesem Ausführungsbeispiel ist der Mittelabschnitt 205 kreisringförmig ausgeformt, in Fig. 1 ist eine hohlkegelstumpfförmige Ausgestaltung des Mittelabschnitts 205 dargestellt. Der Halteabschnitt 160 erstreckt sich gemäß diesem Ausführungsbeispiel von einer Unterseite des Mittelabschnitts 205 und der Führungsabschnitt 155 von einer der Unterseite gegenüberliegend angeordneten Oberseite des Mittelabschnitts 205. Der Halteabschnitt 160 erstreckt sich gemäß diesem Ausführungsbeispiel von einem äußeren Randabschnitt der Unterseite und/oder der Führungsabschnitt 155 von einem im Wesentlichen mittigen Bereich der Oberseite weg. Zwischen der Oberseite und dem Randabschnitt weist der Mittelabschnitt 205 gemäß diesem Ausführungsbeispiel eine Stufe 210 auf, in welcher ein Dichtelement 215 aufgenommen ist, das dazu ausgeformt ist, um die Führungshülse 110 gegen das Gehäuse 120 abzudichten. Bei dem Dichtelement 215 handelt es sich gemäß diesem Ausführungsbeispiel um einen Dichtring, der in einer umlaufend verlaufenden Stufe 210 angeordnet ist.

Die Führungshülse 110 weist gemäß diesem Ausführungsbeispiel zumindest eine Axialrippe 220 auf, die sich von der dem Halteabschnitt 160 zugewandten Unterseite des Mittelabschnitts 205 weg erstreckt. Eine Erstreckungsachse der Axialrippe 220 ist gemäß diesem Ausführungsbeispiel parallel zu dem Führungsabschnitt 155 verlaufend angeordnet. Eine Erstreckungslänge der Axialrippe 220 ist gemäß diesem Ausführungsbeispiel länger als eine Erstreckungslänge des Rasthakens. Die Axialrippe 220 erstreckt sich gemäß diesem Ausführungsbeispiel von einem mittigen Bereich eines Radius des Mittelabschnitts 205 weg und/oder ermöglicht eine axiale Pressung in den Schalldämpfer 165.

Die Führungshülse 110 weist gemäß diesem Ausführungsbeispiel zumindest eine Radialrippe 225 auf, die sich an der Unterseite des Mittelabschnitts 205 radial zwischen einer Hülsendurchgangsöffnung 230 der Führungshülse 110 und dem Halteabschnitt 160 erstreckt. Gemäß diesem Ausführungsbeispiel verläuft die Radialrippe 225 von der Hülsendurchgangsöffnung 230 schräg oder keilförmig zu dem Halteabschnitt 160 hin.

Gemäß einem Ausführungsbeispiel ist die Axialrippe 220 an der Radialrippe 225 angeordnet.

Der Führungsabschnitt 155 formt gemäß diesem Ausführungsbeispiel eine Außenhülse und eine von der Außenhülse umschlossene Innenhülse aus, wobei die Innenhülse die Hülsendurchgangsöffnung 230 der Führungshülse 110 umfasst. Ein Innendurchmesser der Manschette 115 ist gemäß diesem Ausführungsbeispiel gleich oder gemäß einem alternativen Ausführungsbeispiel kleiner als ein Innendurchmesser des Führungsabschnitts 155 der Führungshülse 110. Der Gegenführungsabschnitt 235 der Manschette 115 und der Führungsabschnitt 155 sind gemäß diesem Ausführungsbeispiel ausgeformt, um einen Spalt zwischen dem Gegenführungsabschnitt 235 und dem Führungsabschnitt 155 abzudichten. Gemäß diesem Ausführungsbeispiel liegt der Gegenführungsabschnitt 235 an oder in jeweils einer Außenwand der Innenhülse und der Außenhülse an.

Die Führungshülse 110 ist gemäß diesem Ausführungsbeispiel einstückig und/oder insgesamt trichterförmig ausgeformt.

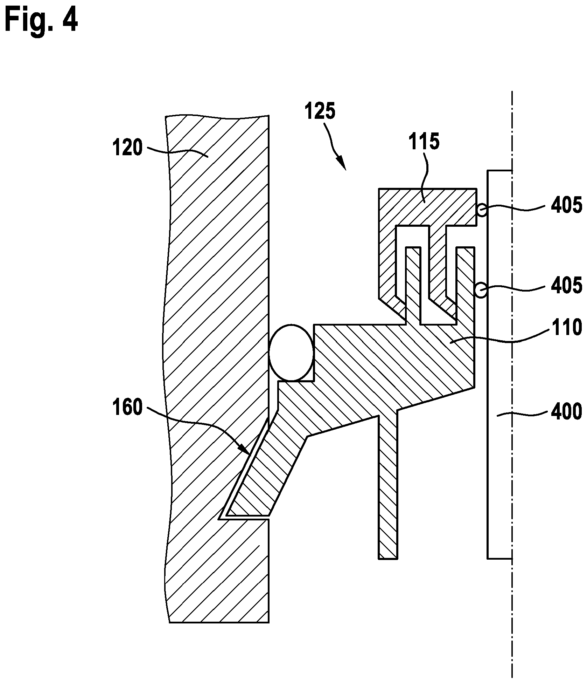

Im Folgenden werden Ausführungsbeispiele der Führungshülsenvorrichtung 125 oder der Führungshülse 110 noch einmal genauer mit anderen Worten beschrieben:
Die hier vorgestellte Führungshülse 110 kann auch als eine Führungshülse 110 mit Schnappgeometrie bezeichnet werden. Eine Aufgabe der Führungshülse 110 ist es, die Führung der Manschette 115 zu bilden. Gemäß diesem Ausführungsbeispiel realisiert die Führungshülsenvorrichtung 125 aufeinander angepasste Manschetten- und Führungshülseninnendurchmesser. Eine Montage der Führungshülsenvorrichtung 125 ist nun vorteilhafterweise von unten in das Gehäuse 120 möglich, da durch ein Montagewerkzeug die Manschette 115 auf der Führungshülse 110 ausgerichtet werden kann, siehe hierzu auch das Montagewerkzeug in Fig. 4. Eine solche Montage von unten ist eine Grundvoraussetzung für ein in einem oberen Bereich geschlossenes Gehäuse 120, gemäß diesem Ausführungsbeispiel ein einteiliges Gehäuse 120, das zur Kostenersparnis beiträgt.

Eine weitere Aufgabe der Führungshülse 110 ist es, pneumatische Kräfte abzufangen und einen geschlossenen Druckbereich zu bilden. Durch die Verrastung der Schnappgeometrie der Führungshülse 110 in dem Gehäuse 120 ist vorteilhafterweise eine Ersparnis eines zusätzlichen Sicherungsringes ermöglicht und zusätzlich entsteht vorteilhafterweise ein sehr geringer Montageaufwand. Gemäß einem Ausführungsbeispiel ist der Rasthaken unlösbar in dem Gehäuse 120 eingerastet. Ein Vorteil liegt zudem darin, dass keine unzulässigen Ersatzteile eingebaut werden können, da eine zerstörungsfreie Entfernung der Führungshülse 110 nicht möglich ist.

Eine weitere Aufgabe der Führungshülse 110 ist es, bei einer Entlüftung Luft zum Schalldämpfer 165 zu führen. Diese Aufgabe wird durch die Führungshülse 165 gelöst, indem oberhalb des Gewebes des Schalldämpfers 165 ein Raum 240 geschaffen ist, in dem sich die Luft vor einem Ausströmen aus dem Schalldämpfer 165 entspannen kann. Die seitlichen Rippen in Form der Radialrippen 225 in diesem Raum 240 sorgen dafür, dass entstehende Luftwirbel reduziert werden. Der Halteabschnitt 160 in Form von seitlichen Schnapprippen bewirkt die radiale Verpressung 200 des Gestrickes und somit wird ein Vorbeiströmen der Luft zwischen dem Gehäuse 120 und dem Schalldämpder 165 effektiv verhindert. Zusätzlich wirkt noch eine axiale Verpressrippe in Form der Axialrippe 220, welche einen Luftstrom 245 in Richtung Gehäuse 120 reduziert.

Eine Montage der Führungshülsenvorrichtung 125 und/oder eine Ausrichtung ist vorteilhafterweise durch ein einziges Montagewerkzeug von einer unteren Seite des Gehäuses 120 ermöglicht. Das Relaisventil oder sogar der gesamte elektropneumatische Modulator kann somit vorteilhafterweise in ein einteiliges Gehäuse 120 montiert angeordnet sein oder montiert werden, siehe auch Fig. 1. Zusätzliche Bauteile wie ein Sicherungsring zur Befestigung der Führungshülse 110 oder des gesamten Relaisventils in dem Gehäuse 120 sind vorteilhafterweise dank des Halteabschnitts 160 nicht nötig. Aufgrund der schrägen Ausformung des Halteabschnitts 160 ist gemäß diesem Ausführungsbeispiel zwischen der Unterseite des Mittelabschnitts 205 und dem Schalldämpfer 165 der Raum 240 geschaffen, der eine Dämpfung eines durch die Hülsendurchgangsöffnung 230 zu dem Schalldämpfer 165 strömenden Luftstroms 245 ermöglicht. Eine zusätzliche Dämpfungsplatte mit Löchern zwischen der Führungshülse 110 und dem Schalldämpfer 165 ist somit nicht nötig. Gemäß einem alternativen Ausführungsbeispiel ist zwischen der Führungshülse 110 und dem Schalldämpfer 165 dennoch eine solche Dämpfungsplatte mit Löchern angeordnet, um eine noch stärkere Dämpfung des Luftstroms 245 zu bewirken. Aufgrund der verpressenden Wirkung des Halteabschnitts 160 an dem Schalldämpfer 165 ist zudem keine zusätzliche Kreis-Verpressung im Gewebe des Schalldämpfers 165 zwischen dem Gehäuse 120 und dem Schalldämpfer 165 vonnöten, um ein seitliches Umströmen des Gewebes zu verhindern. Auch diese Aufgabe ist durch den Halteabschnitt 160 gelöst. Gemäß einem alternativen Ausführungsbeispiel ist eine zusätzliche Verpressung des Gewebes des Schalldämpfers 165 durch eine weitere Stufe im Gehäuse 120 realisiert.

Gemäß einem alternativen Ausführungsbeispiel ist auch ein Innendurchmesser der Führungshülse 110 mit Rippen und/oder Stegen verstärkt, wobei zur Montage ein geschlitztes Montagewerkzeug einsetzbar ist. Eine Manschette, welche gemäß einem alternativen Ausführungsbeispiel im Innendurchmesser kleiner ist, als die Führungshülse 110, ist mit einem stufenförmigen Montagewerkzeug zentrierbar. Gemäß einem alternativen Ausführungsbeispiel ist der Raum 240 zumindest teilweise durch das Gehäuse 120 in Form eines Gussgehäuses selber gebildet.

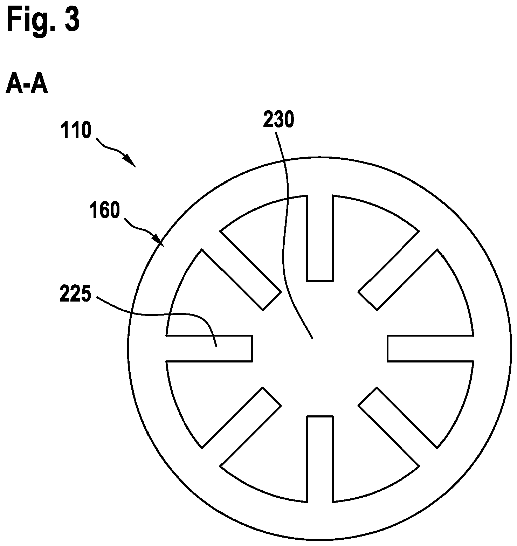

**Fig. 3** zeigt eine schematische Querschnittsdarstellung einer Unterseite einer Führungshülse 110 gemäß einem Ausführungsbeispiel. Dabei kann es sich um ein Ausführungsbeispiel der in Fig. 1 oder Fig. 2 beschriebenen Führungshülse 110 handeln.

Gemäß diesem Ausführungsbeispiel weist die Unterseite der Führungshülse 110 eine Mehrzahl von Radialrippen 225 auf, die radial um die Hülsendurchgangsöffnung 230 angeordnet sind. Gemäß diesem Ausführungsbeispiel weist die Unterseite acht der Radialrippen 225 auf, die gleichmäßig zueinander beabstandet angeordnet sind.

Der Halteabschnitt 160 ist gemäß diesem Ausführungsbeispiel umlaufend an einem Umlaufrand des Mittelabschnitts angeordnet oder eine Mehrzahl von den Halteabschnitt 160 ausformenden Rasthaken ist umlaufend an umlaufenden Randabschnitten des Umlaufrands angeordnet. Gemäß einem Ausführungsbeispiel formen zwanzig derartige Rasthaken den Halteabschnitt 160 aus. Gemäß einem Ausführungsbeispiel sind an der Unterseite auch eine Mehrzahl der Axialrippen angeordnet, gemäß einem Ausführungsbeispiel acht der Axialrippen, die gemäß einem Ausführungsbeispiel gleichmäßig zueinander beabstandet und/oder ringförmig angeordnet sind und somit gemäß einem Ausführungsbeispiel eine axiale Kreispressung in den Schalldämpfer ermöglichen.

**Fig. 4** zeigt einen Ausschnitt einer seitlichen Querschnittsdarstellung einer Führungshülsenvorrichtung 125 gemäß einem Ausführungsbeispiel. Dabei kann es sich um den in Fig. 2 beschriebenen Abschnitt handeln, wobei die Führungshülsenvorrichtung 125 gemäß diesem Ausführungsbeispiel während einer Montage an das Gehäuse 120 mit einem Montagewerkzeug 400 dargestellt ist. Zwei Führungsflächen 405 und/oder eine Ausrichtung sind gemäß diesem Ausführungsbeispiel auf einer Achse angeordnet.

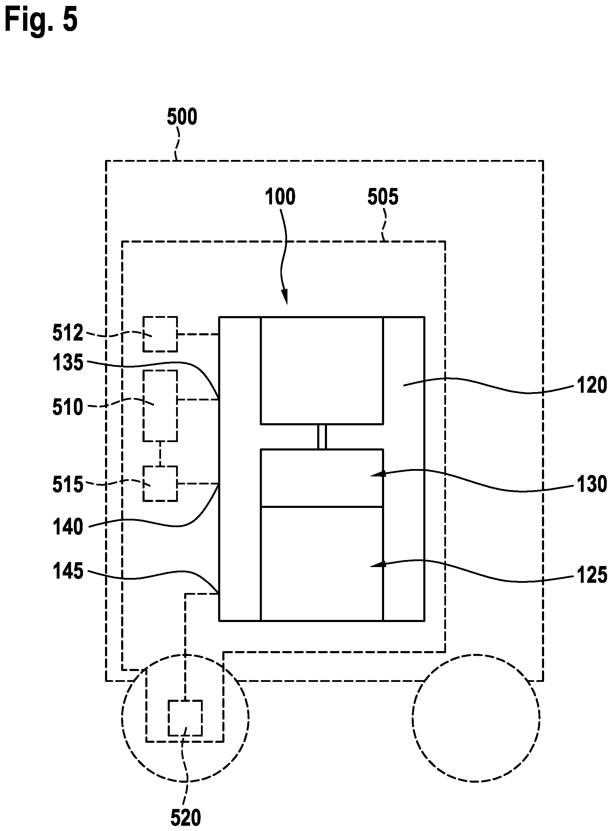

**Fig. 5** zeigt eine schematische Querschnittsdarstellung eines Fahrzeugs 500 mit einem elektropneumatischen Modulator 100 mit einer Führungshülsenvorrichtung 125 und einem Relaiskolben 130 gemäß einem Ausführungsbeispiel. Dabei kann es sich um den in Fig. 1 beschriebenen Modulator 100 mit der in einer der vorangehenden Figuren vorgestellten Führungshülsenvorrichtung 125 handeln.

Der Modulator 100 ist gemäß diesem Ausführungsbeispiel in oder an eine elektropneumatische Bremsanlage 505 gekoppelt angeordnet. Die Bremsanlage 505 umfasst gemäß einem Ausführungsbeispiel neben dem Modulator 100 einen Vorratsbehälter 510 zum Bereitstellen von Druckluft, eine Steuereinrichtung 512 zum Bereitstellen eines elektrischen Steuersignals, eine Fußbremseinrichtung 515 zum Bereitstellen des pneumatischen Steuersignals und/oder eine Radbremseinrichtung 520 zum Abbremsen eines Rads des Fahrzeugs 500.

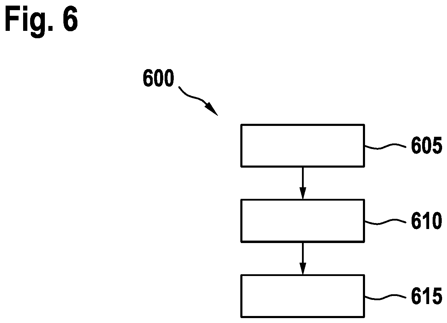

**Fig. 6** zeigt ein Ablaufdiagramm eines Verfahrens 600 zum Herstellen eines Relaisventils gemäß einem Ausführungsbeispiel. Dabei kann es sich um das in Fig. 1 beschriebene Relaisventil handeln.

Das Verfahren 600 umfasst einen Schritt 605 des Bereitstellens, einen Schritt 610 des Einfügens und einen Schritt 615 des Einführens.

Im Schritt 605 des Bereitstellens werden ein Gehäuse, ein Relaiskolben und eine Führungshülsenvorrichtung bereitgestellt. Im Schritt 610 des Einfügens wird der Relaiskolben in das Gehäuse eingefügt. Im Schritt 615 des Einführens wird die Führungshülsenvorrichtung in das Gehäuse eingeführt, wobei die Führungshülsenvorrichtung derart in das Gehäuse eingeführt wird, dass der Führungsabschnitt der Führungshülse an den Gegenführungsabschnitt der Manschette gekoppelt ist und der Halteabschnitt der Führungshülse formschlüssig in dem Gehäuse befestigt ist.

Gemäß diesem Ausführungsbeispiel wird der Schritt 615 des Einführens nach dem Schritt 610 des Einfügens ausgeführt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: elektropneumatischer Modulator
- 105: Relaisventil
- 110: Führungshülse
- 115: Manschette
- 120: Gehäuse
- 125: Führungshülsenvorrichtung
- 130: Relaiskolben
- 135: Vorratsanschluss
- 140: pneumatischer Steuereingang
- 145: Bremsausgang
- 150: Aufnahmekammer
- 155: Führungsabschnitt
- 160: Halteabschnitt
- 165: Schalldämpfer
- 200: Außenpressung
- 205: Mittelabschnitt
- 210: Stufe
- 215: Dichtelement
- 220: Axialrippe
- 225: Radialrippe
- 230: Hülsendurchgangsöffnung
- 235: Gegenführungsabschnitt
- 240: Raum
- 245: Luftstrom
- 400: Montagewerkzeug
- 405: Führungsfläche
- 500: Fahrzeug
- 505: Bremsanlage
- 510: Vorratsbehälter
- 512: Steuereinrichtung
- 515: Fußbremseinrichtung
- 520: Radbremseinrichtung
- 600: Verfahren zum Herstellen eines Relaisventils
- 605: Schritt des Bereitstellens
- 610: Schritt des Einfügens
- 615: Schritt des Einführens

## Patentansprüche

1. Führungshülse (110) zum Führen einer Manschette (115) eines Relaisventils (105) für einen elektropneumatischen Modulator (100) für eine Bremsanlage (505) für ein Fahrzeug (500), wobei die Führungshülse (110) die folgenden Merkmale umfasst:
einen Führungsabschnitt (155), der an einen Gegenführungsabschnitt (235) der Manschette (115) des Relaisventils (105) koppelbar ausgeformt ist, um ein Führen der Manschette (115) entlang des Führungsabschnitts (155) zu ermöglichen; und
einen Halteabschnitt (160), der dazu ausgeformt ist, um die Führungshülse (110) formschlüssig in einem Gehäuse (120) des Relaisventils (105) zu befestigen,
**dadurch gekennzeichnet, dass**
der Halteabschnitt (160) zumindest einen Rasthaken und/oder ein Bajonett ausformt, um in einen Hinterschnitt des Gehäuses (120) einzurasten oder einzuschnappen.

2. Führungshülse (110) gemäß Anspruch 1, bei der sich der Führungsabschnitt (155) und der Halteabschnitt (160) zu zwei gegenüberliegenden Seiten der Führungshülse (110) erstrecken.

3. Führungshülse (110) gemäß einem der vorangegangenen Ansprüche, mit einem zwischen dem Führungsabschnitt (155) und dem Halteabschnitt (160) ausgeformten Mittelabschnitt (205), der im Wesentlichen kreisringförmig oder hohlkegelstumpfförmig ausgeformt ist.

4. Führungshülse (110) gemäß Anspruch 3, bei der sich der Halteabschnitt (160) von einem Randabschnitt einer Unterseite des Mittelabschnitts und/oder der Führungsabschnitt (155) von einem im Wesentlichen mittigen Bereich einer der Unterseite gegenüberliegend angeordneten Oberseite des Mittelabschnitts (205) weg erstreckt.

5. Führungshülse (110) gemäß einem der Ansprüche 3 bis 4, mit zumindest einer Axialrippe (220), die sich von einer dem Halteabschnitt (160) zugewandten Unterseite des Mittelabschnitts (205) weg erstreckt und/oder eine Erstreckungsachse aufweist, die parallel zu dem Führungsabschnitt (155) verlaufend angeordnet ist.

6. Führungshülse (110) gemäß einem der Ansprüche 3 bis 5, mit zumindest einer Radialrippe (225), die sich an einer dem Halteabschnitt (160) zugewandten Unterseite des Mittelabschnitts (225) radial zwischen einer Hülsendurchgangsöffnung (230) der Führungshülse (110) und dem Halteabschnitt (160) erstreckt.

7. Führungshülse (110) gemäß einem der vorangegangenen Ansprüche, bei der der Führungsabschnitt (155) eine Außenhülse und eine von der Außenhülse umschlossene Innenhülse ausformt, wobei die Innenhülse eine Hülsendurchgangsöffnung (230) der Führungshülse (110) umfasst.

8. Führungshülse (110) gemäß einem der vorangegangenen Ansprüche, die einstückig und/oder trichterförmig ausgeformt ist.

9. Führungshülsenvorrichtung (125) mit einer Führungshülse (110) gemäß einem der vorangegangenen Ansprüche und der Manschette (115), wobei ein Innendurchmesser der Manschette (115) gleich oder kleiner ist als ein Innendurchmesser des Führungsabschnitts (155) der Führungshülse (110).

10. Führungshülsenvorrichtung (125) gemäß Anspruch 10, bei der der Gegenführungsabschnitt (235) der Manschette (115) und der Führungsabschnitt (155) ausgeformt sind, um einen Spalt zwischen dem Gegenführungsabschnitt (235) und dem Führungsabschnitt (155) abzudichten.

11. Relaisventil (105) mit einem Gehäuse (120) mit einem Hinterschnitt, einer in dem Gehäuse (120) angeordneten Führungshülsenvorrichtung (125) gemäß einem der Ansprüche 9 bis 10 und einem in dem Gehäuse (120) anordenbaren oder angeordneten Relaiskolben (130) zum Bewegen der Manschette (115) entlang des Führungsabschnitts (155) der Führungshülse (110).

12. Relaisventil (105) gemäß Anspruch 11, bei dem das Gehäuse (120) einstückig ausgeformt ist.

13. Verfahren (600) zum Herstellen eines Relaisventils (105), wobei das Verfahren (600) die folgenden Schritte umfasst:
Bereitstellen (605) eines Gehäuses (120), eines Relaiskolbens (130) und einer Führungshülsenvorrichtung (125) gemäß einem der Ansprüche 9 bis 10;
Einfügen (610) des Relaiskolbens (130) in das Gehäuse (120);
Einführen (615) der Führungshülsenvorrichtung (125) in das Gehäuse (120), wobei die Führungshülsenvorrichtung (125) derart in das Gehäuse (120) eingeführt wird, dass der Führungsabschnitt (155) der Führungshülse (110) an den Gegenführungsabschnitt (235) der Manschette (115) gekoppelt ist und der Halteabschnitt (160) der Führungshülse (110) formschlüssig in dem Gehäuse (120) befestigt ist, indem der Halteabschnitt (160) zumindest einen Rasthaken und/oder ein Bajonett ausformt, um in einen Hinterschnitt des Gehäuses (120) einzurasten oder einzuschnappen.

## Claims

1. Guide sleeve (110) for guiding a collar (115) of a relay valve (105) for an electropneumatic modulator (100) for a brake system (505) for a vehicle (500), wherein the guide sleeve (110) comprises the following features:
a guide section (155) which is formed so as to be couplable to a counterpart guide section (235) of the collar (115) of the relay valve (105) in order to allow guidance of the collar (115) along the guide section (155); and
a holding section (160) which is formed so as to fasten the guide sleeve (110) in positively locking fashion in a housing (120) of the relay valve (105)
**characterised in that**
the holding section (160) forms at least one detent hook and/or one bayonet for latching or snapping into an undercut of the housing (120).

2. Guide sleeve (110) according to claim 1, in which the guide section (155) and the holding section (160) extend to two opposite sides of the guide sleeve (110).

3. Guide sleeve (110) according to any of the preceding claims, having a central section (205) which is formed between the guide section (155) and the holding section (160) and which is of substantially annular or hollow frustoconical form.

4. Guide sleeve (110) according to claim 3, in which the holding section (160) extends away from an edge section of an underside of the central section, and/or the guide section (155) extends away from a substantially central region of a top side, arranged opposite the underside, of the central section (205).

5. Guide sleeve (110) according to any of claims 3 to 4, having at least one axial rib (220) which extends away from an underside, facing toward the holding section (160), of the central section (205) and/or which has an extent axis which is arranged so as to run parallel to the guide section (155).

6. Guide sleeve (110) according to any of claims 3 to 5, having at least one radial rib (225) which extends radially between a sleeve through-opening (230) of the guide sleeve (110) and the holding section (160) on an underside, facing toward the holding section (160), of the central section (225).

7. Guide sleeve (110) according to any of the preceding claims, in which the guide section (155) forms an outer sleeve and an inner sleeve which is enclosed by the outer sleeve, wherein the inner sleeve surrounds a sleeve through-opening (230) of the guide sleeve (110).

8. Guide sleeve (110) according to any of the preceding claims, which is of one-piece and/or funnel-shaped form.

9. Guide sleeve device (125) having a guide sleeve (110) according to any of the preceding claims and having the collar (115), wherein an inner diameter of the collar (115) is equal to or smaller than an inner diameter of the guide section (155) of the guide sleeve (110).

10. Guide sleeve device (125) according to claim 10, in which the counterpart guide section (235) of the collar (115) and the guide section (155) are formed so as to seal off a gap between the counterpart guide section (235) and the guide section (155).

11. Relay valve (105) having a housing (120) with an undercut, having a guide sleeve device (125) according to either of claims 9 and 10, which is arranged in the housing (120), and having a relay piston (130), which can be or is arranged in the housing (120), for the purposes of moving the collar (115) along the guide section (155) of the guide sleeve (110).

12. Relay valve (105) according to claim 11, in which the housing (120) is of one-piece form.

13. Method for producing a relay valve (105), wherein the method (600) comprises the following steps:
providing (605) a housing (120), a relay piston (130) and a guide sleeve device (125) according to either of claims 9 and 10;
inserting (610) the relay piston (130) into the housing (120);
introducing (615) the guide sleeve device (125) into the housing (120), wherein the guide sleeve device (125) is introduced into the housing (120) such that the guide section (155) of the guide sleeve (110) is coupled to the counterpart guide section (235) of the collar (115) and the holding section (160) of the guide sleeve (110) is fastened in positively locking fashion in the housing (120), while the holding section (160) forms at least one detent hook and/or one bayonet for latching or snapping into an undercut of the housing (120).

## Revendications

1. Manchon (110) de guidage pour le guidage d'une coupelle (115) d'une vanne (105) relais d'un modulateur (100) électropneumatique d'une installation (505) de freinage d'un véhicule (500), le manchon (110) de guidage comprenant les caractéristiques suivantes :
une partie (155) de guidage, qui est formée de manière à pouvoir s'accoupler à une partie (235) antagoniste de guidage de la coupelle (115) de la vanne (105) relais, pour rendre possible un guidage de la coupelle (115) le long de la partie (155) de guidage ; et
une partie (160) de retenue, qui est conformée pour fixer le manchon (110) de guidage à complémentarité de forme dans un corps (120) de la vanne (105) relais,
**caractérisé en ce que**
la partie (160) de retenue forme au moins un crochet d'encliquetage et/ou une baïonnette, afin de s'encliqueter ou de s'enclencher dans la partie arrière du corps (120).

2. Manchon (110) de guidage suivant la revendication 1, dans lequel la partie (155) de guidage et la partie (160) de retenue s'étendent de deux côtés opposés du manchon (110) de guidage.

3. Manchon (110) de guidage suivant l'une des revendications précédentes, comprenant une partie (205) médiane, qui est formée entre la partie (155) de guidage et la partie (160) de retenue et qui est sensiblement en forme d'anneau de cercle ou de tronc de cône creux.

4. Manchon (110) de guidage suivant la revendication 3, dans lequel la partie (160) de retenue s'étend en s'éloignant d'une partie de bord d'un côté inférieur de la partie médiane et/ou la partie (155) de guidage s'étend en s'éloignant d'une région sensiblement médiane d'un côté supérieur, opposé au côté inférieur, de la partie (205) médiane.

5. Manchon (110) de guidage suivant l'une des revendications 3 à 4, comprenant au moins une nervure (220) axiale, qui s'étend en s'éloignant d'un côté inférieur, tourné vers la partie (160) de retenue, de la partie (205) médiane et/ou a un axe suivant laquelle elle s'étend, qui est disposé en s'étendant parallèlement à la partie (155) de guidage.

6. Manchon (110) de guidage suivant l'une des revendications 3 à 5, comprenant au moins une nervure (225) radiale, qui, sur un côté inférieur, tourné vers la partie (160) de retenue, de la partie (225) médiane, s'étend radialement entre une ouverture (230) traversante du manchon (110) de guidage et la partie (160) de retenue.

7. Manchon (110) deguidage suivant l'une des revendications précédentes, dans lequel la partie (155) de guidage forme un manchon extérieur et un manchon intérieur entouré du manchon extérieur, dans lequel le manchon intérieur comprend une ouverture (230) traversante du manchon (110) de guidage.

8. Manchon (110) de guidage suivant l'une des revendications précédentes, qui est d'une seule pièce et/ou en forme de trémie.

9. Dispositif (125) à manchon de guidage, comprenant un manchon (110) de guidage suivant l'une des revendications précédentes et la coupelle (115), dans lequel un diamètre intérieur de la coupelle (115) est inférieur ou égal à un diamètre intérieur de la partie (155) de guidage du manchon (110) de guidage.

10. Dispositif (125) à manchon de guidage suivant la revendication 10, dans lequel la partie (235) antagoniste de guidage de la coupelle (115) et la partie (155) de guidage sont formées pour rendre étanche un intervalle entre la partie (235) antagoniste de guidage et la partie (155) de guidage.

11. Vanne (105) relais comprenant un corps (120) ayant une partie arrière, un dispositif (125) à manchon de guidage disposé dans le corps (120) suivant l'une des revendications 9 à 10 et un piston (130) relais disposé dans le corps (120) ou pouvant l'être, pour déplacer la coupelle (115) le long de la partie (155) de guidage du manchon (110) de guidage.

12. Vanne (105) relais suivant la revendication 11, dans lequel le corps (120) est d'une seule pièce.

13. Procédé (600) de fabrication d'une vanne (105) relais, dans lequel le procédé (600) comprend les stades suivants :
on se procure (605) un corps (120), un piston (130) relais et un dispositif (125) à manchon de guidage suivant l'une des revendications 9 à 10 ;
on met (610) le piston (130) relais dans le corps (120) ;
on insère (615) le dispositif (125) à manchon de guidage dans le corps (120), le dispositif (125) à manchon de guidage étant inséré dans le corps (120), de manière à accoupler la partie (155) de guidage du manchon (110) de guidage à la partie (235) antagoniste de guidage de la coupelle (115) et de manière à ce que la partie (160) de retenue du manchon (110) de guidage soit fixée à complémentarité de forme dans le corps (120), par le fait que la partie (160) de retenue forme au moins un crochet d'encliquetage et/ou une baïonnette pour s'encliqueter ou s'enclencher dans une partie arrière du corps (120).
